# EUROPEAN PATENT APPLICATION

(11) **EP 1 845 528 A1**
(43) Date of publication of application: **17.10.2007**
(21) Application number: 07112762.5
(22) Date of filing: 08.12.2005
(51) Int. Cl.: G11B 20/10, G10H 1/00, G11B 27/02, G11B 27/034, G11B 27/038, G11B 27/06, G11B 27/34, G11B 27/36

(54) **Music data processing apparatus and method**

(30) Priority: 13.12.2004 JP 2004359653
(62) Divisional of application: 05111818.0
(71) Applicant: YAMAHA CORPORATION, Naka-ku Hamamatsu-shi Shizuoka-ken 430-8650 (JP)
(72) Inventor: Nakazono, Hiroki, Shizuoka 430-8650 (JP)
(74) Representative: Ettmayr, Andreas

(57) **Abstract**

In a storage section (10), there are stored a plurality of music data sets of a given first format. Reproduction definition information defines reproducing order of a group of desired music data sets among the plurality of music data sets stored in the storage section and includes checkmarks indicating whether individual ones of the music data sets stored in the storage section are to be reproduced. On the basis of the reproduction definition information, all music data sets of the first format for which the checkmarks indicate that reproduction is to be performed are read out from the storage section (10) and automatically supplied as objects to be converted into a second format different from the first format.

## Description

The present invention relates to music data processing apparatus for converting music data sets of a given format to music data of another format. More particularly, the present invention relates to an improved music data processing apparatus, method and computer program which can collectively convert a plurality of music data sets on the basis of predetermined reproduction defining information that defines objects of reproduction and reproducing order of the objects of reproduction.

In recent years, there have been popularly used electronic music apparatus, such as electronic music reproduction apparatus like hard disk recorders, electronic musical instruments and personal computers (i.e., those provided with tone generators). These electronic music apparatus are each constructed to reproduce music data sets of a standard or format unique or specific to the type or maker of the apparatus (hereinafter referred to as "maker/apparatus-specific format"). Therefore, when a user wants music data sets, reproducible by the electronic music apparatus currently used by the user, reproduced by another electronic music apparatus, the music data sets reproducible by the electronic music apparatus currently used by the user (hereinafter referred to as "music data sets of a first format") have to be converted into music data sets reproducible by the other music apparatus (the thus-converted music data sets will hereinafter be referred to as "music data sets of a second format"). For that purpose, there have heretofore been known and used apparatus and programs for converting music data sets from one format (or first format) to another format (or second format), one example of which is disclosed in Japanese Patent Application Laid-open Publication No. HEI-10-124046 corresponding to U.S. Patent No. 6, 034, 314. In the apparatus (system) disclosed in the No. HEI-10-124046 publication, music data sets of the first format to be converted are designated by the user one by one and converted in accordance with such user's designation.

Further, generally, in electronic music apparatus, music data sets can be reproduced successively in given reproducing order on the basis of reproduction that defines information (so-called "play list") defining objects of reproduction and reproducing order of the objects of reproduction, without the user selecting music data sets one by one. In creating such a play list, the user selects, one by one in desired reproducing order, desired music data sets to be reproduced, from among a multiplicity of prestored music data sets.

In this specification, the terms "formats" of music data sets embrace, for example, data structures (such as monaural and stereophonic structures) and data file formats (such as a WAV file format and MP3 file format).

Sometimes, the user of the music apparatus may want music data sets, listed in a play list created via the music apparatus currently used by the user, reproduced by another music apparatus in the same reproducing order as defined in the play list. As noted above, when music data sets are to be reproduced by another music apparatus, the music data sets have to be converted in accordance with the other music apparatus. However, with the conventional technique, the user has to select one by one the music data sets, defined in the play list as objects of reproduction from among a multiplicity of music data sets, and the thus-selected music data sets have to be converted individually. Thus, particularly, in cases where a great many music data sets are to be converted, such selection and conversion operations would become very laborious and cumbersome, and it would take a very long time to convert all of the selected music data sets. Further, after the conversion of the music data sets via the other music apparatus, the user has to create a play list by selecting, in desired reproducing order, desired music data sets as objects of reproduction from among the multiplicity of stored music data sets. Namely, each time the music data sets have been converted, the above-mentioned operations, including creation of a play list, have to be performed in the other electronic music apparatus as well, which is laborious and time-consuming.

In view of the foregoing, it is an object of the present invention to provide a music data processing apparatus and method and a computer program therefor which allow a plurality of music data sets of one format to be collectively converted into another format in a convenient manner without wasting computing resources.

To accomplish the above-mentioned object, the present invention provides an improved music data processing apparatus according to claim 1.

According to the present invention, the plurality of music data sets of the first format defined by the reproduction definition information are identified as objects of conversion into the second format different from the first format. Then, the thus-identified music data sets are read out from the storage section. The reproduction definition information is information that defines a plurality of music data sets of the first format to be reproduced in succession from among a multiplicity of music data sets stored in the storage section and also defines reproducing order of the to-be-reproduced music data sets. The plurality of music data sets of the first format defined by the reproduction definition information are used to identify music data sets as objects of reproduction. The predefined reproduction definition information includes checkmarks indicating whether or not reproduction of individual ones of the plurality of music data sets is to be performed.

Thus, when music data sets of a given format are to be converted to music data sets of another format, the present invention identifies to-be-identified music data sets (i.e., objects of reproduction) on the basis of the predetermined reproduction definition information defining the objects of reproduction and their reproducing order. In this way, the user is allowed to readily convert the plurality of music data sets in a collective fashion by only using the reproduction definition information previously created for reproduction purposes.

The present invention may be constructed and implemented not only as the apparatus invention as discussed above but also as a method invention. Also, the present invention may be arranged and implemented as a software program for execution by a processor such as a computer or DSP, as well as a storage medium storing such a software program. Further, the processor used in the present invention may comprise a dedicated processor with dedicated logic built in hardware, not to mention a computer or other general-purpose type processor capable of running a desired software program.

The following will describe embodiments of the present invention, but it should be appreciated that the present invention is not limited to the described embodiments and various modifications of the invention are possible without departing from the basic principles. The scope of the present invention is therefore to be determined solely by the appended claims.

For better understanding of the object and other features of the present invention, its preferred embodiments will be described hereinbelow in greater detail with reference to the accompanying drawings, in which:
Fig. 1 is a block diagram illustrating a general hardware setup of an electronic music apparatus to which is applied a music data processing apparatus in accordance with an embodiment of the present invention;
Figs. 2A and 2B are conceptual diagrams explanatory of an example data structure of a play list used in the embodiment;
Figs. 3A and 3B are conceptual diagrams explanatory of example structures of pre-export music data sets and post-export music data sets used in the embodiment;
Figs. 4A - 4D are conceptual diagrams explanatory of four types of data conversion processing performed in the embodiment;
Fig. 5 is a flow chart showing an example operational sequence of main processing performed in the embodiment;
Fig. 6 is a flow chart showing an example operational sequence of first-type export processing performed in the embodiment;
Fig. 7 is a flow chart showing an example operational sequence of second-type export processing performed in the embodiment;
Fig. 8 is a flow chart showing an example operational sequence of third-type export processing performed in the embodiment; and
Fig. 9 is a flow chart showing an example operational sequence of fourth-type export processing performed in the embodiment.

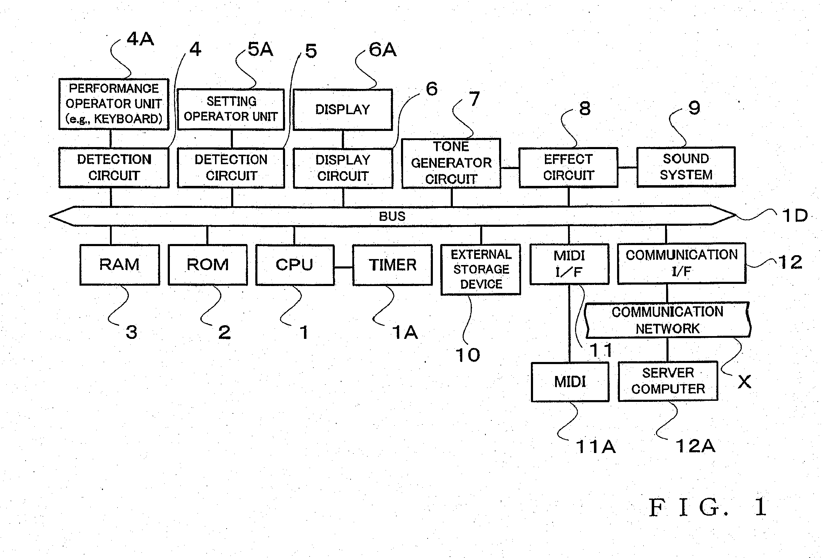

Fig. 1 is a block diagram illustrating a general hardware setup of an electronic music apparatus to which is applied a music data processing apparatus employing a music data processing apparatus in accordance with an embodiment of the present invention. This electronic music apparatus is controlled by a microcomputer comprising a microprocessor unit (CPU) 1, a read-only memory (ROM) 2 and a random-access memory (RAM) 3. The CPU 1 controls behavior of the entire electronic music apparatus. To the CPU 1 are connected, via a data and address bus 1D, the ROM 2, RAM 3, detection circuits 4 and 5, display circuit 6, tone generator (T.G.) circuit 7, effect circuit 8, external storage device 10, MIDI interface (I/F) 11 and communication interface 12. Also connected to the CPU 1 is a timer 1A for counting various time periods and intervals, for example, to signal interrupt timing for timer interrupt processes. For example, the timer 1A generates clock pulses, which are given to the CPU 1 as processing timing instructions or as interrupt instructions. The CPU 1 carries out various processes in accordance with such instructions.

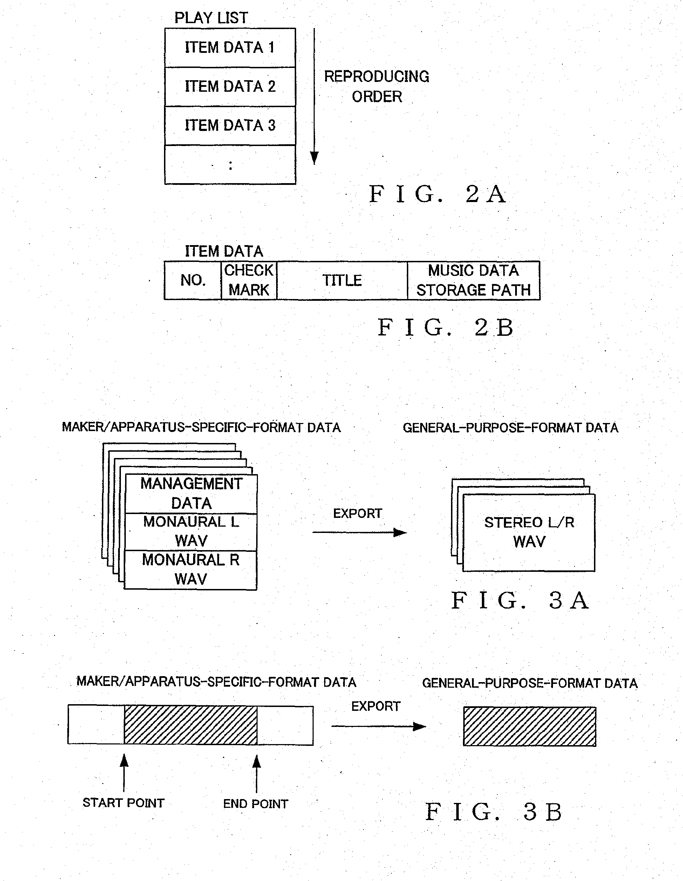

The ROM 2 has prestored therein various programs to be executed by the CPU 1 and various data. The RAM 3 is used as a working memory for temporarily storing various data generated as the CPU 1 executes a predetermined program, as a memory for storing the currently-executed program and data related thereto, and for various other purposes. Predetermined address regions of the RAM 3 are allocated and used as registers, flags, tables, memories, etc. Performance operator unit 4A is, for example, in the form of a keyboard having a plurality of keys for designating pitches of tones to be generated and a plurality of key switches provided in corresponding relation to the keys. The performance operator unit (e.g., keyboard) 4A can be used not only for a manual performance by a user but also as input means for making various settings in the electronic music apparatus, etc. The detection circuit 4 detects depression and release of the keys on the performance operator unit 4A to thereby produce detection outputs. Setting operator (e.g., switch) unit 5A includes, for example, play list selection switches for selecting a desired play list (see Fig. 2), music data registration/deletion switches for selecting a music data set (see Fig. 3) to be added or deleted to or from a play list, an export switch for instructing conversion (also referred to as "export") of a music data set, and a performance button for instructing a reproduction start or stop of a music data set. The performance operator unit 5A may of course include various other operators, such as a numerical-value-data inputting key pad operable to select, set and control a tone pitch, tone color, effect and the like, a character (or letter) data inputting keyboard and a mouse for manipulating a predetermined pointing device displayed on a display 6A. The detection circuit 5 detects operating states of the above-mentioned switches and outputs switch information, corresponding to the detected operating states, to the CPU 1 via the data and address bus 1D.

The display circuit 6 displays, on the display 6A that is, for example, in the form of a liquid crystal display (LCD) panel or CRT, a list of already-registered play lists, a list of music data sets already registered in each of the play lists, a list of music data sets already registered in the external storage device 10 etc. controlling states of the CPU 1, and various other information. By referring to the various information displayed on the display 6A, the user can, for example, ascertain the already-registered play lists and contents of the individual lists and readily register or delete a music data set to or from any one of the play lists. The tone generator (T.G.) circuit 7, which is capable of simultaneously generating tone signals in a plurality of channels, receives, via the data and address bus 1D, various performance information generated in response to user's manipulation on the performance operator unit 4A or various performance information generated on the basis of reproduction of a music data set, and it generates tone signals based on the received performance information. The tone signals thus generated by the tone generator circuit 7 are audibly reproduced or sounded by a sound system 9, including an amplifier and speaker, after being imparted with desired effects via the effect circuit 8. The tone generator circuit 7, effect circuit 8 and sound system 9 may be constructed in any conventionally known manner. For example, any desired tone synthesis method may be used in the tone generator circuit 7, such as the FM, PCM, physical model or formant synthesis method. Further, the tone generator circuit 7 may be implemented by either dedicated hardware or software processing performed by the CPU 1.

The external storage device 10 is provided for storing various data, such as already-registered play lists and a multiplicity of music data sets, as well as control-related data, such as various control programs to be executed by the CPU 1. Where a particular control program is not prestored in the ROM 2, the control program may be prestored in the external storage device (e.g., hard disk device) 10, so that, by reading the control program from the external storage device 10 into the RAM 3, the CPU 1 is allowed to operate in exactly the same way as in the case where the particular control program is stored in the program memory 2. This arrangement greatly facilitates version upgrade of the control program, addition of a new control program, etc. The external storage device 10 may comprise any of various removable-type media other than the hard disk (HD), such as a flexible disk (FD), compact disk (CD-ROM or CD-RAM), magneto-optical disk (MO) and digital versatile disk (DVD), or a semiconductor memory, such as a flash memory.

The MIDI interface (I/F) 11 is provided for inputting performance data of the MIDI format (i.e., MIDI data) from externally-connected other MIDI equipment 11A or the like to the electronic music apparatus, and for outputting performance data of the MIDI format (i.e., MIDI data) from the electronic music apparatus to the other MIDI equipment 11A or the like. The other MIDI equipment 11A may be of any type (or operating type), such as the keyboard type, stringed instrument type, wind instrument type, percussion instrument type or body-attachable type, as long as it can generate MIDI data in response to operation by a user of the equipment. The MIDI interface 11 may be a general-purpose interface rather than a dedicated MIDI interface, such as RS-232C, USB (Universal Serial Bus) or IEEE1394, in which case other data than MIDI event data may be communicated at the same time. In the case where any one of the above-mentioned general-purpose interfaces is used as the MIDI interface 11, the other MIDI equipment 11A may be arranged to communicate other data than MIDI event data. Of course, the performance data may be in any other format than the MIDI format, in which case the MIDI interface 11 and other MIDI equipment 11A are constructed in conformity with the data of the other format. The communication interface (I/F) 12 is an interface connected to a wired or wireless communication network X, such as a LAN, the Internet, telephone line network, etc., via which it can be connected to a desired server computer 12A to receive various desired control programs and data from the server computer 12A. Namely, where any control program or data is not stored in the ROM 2 or external storage device (e.g., hard disk) 10, the communication interface 12 is used to download the control program or data from the server computer 12A. It should be appreciated that the communication interface 12 may be of either or both of wired and wireless types.

Furthermore, the electronic music apparatus of the present invention is not limited to the type where the performance operator unit 4A is a keyboard, and it may be of any other desired type, such as a stringed instrument type, wind instrument type or percussion instrument type. Further, the electronic music apparatus of the present invention is not limited to the type where the performance operator unit 4A, display 6A, tone generator circuit 7, etc. are incorporated together within the body of the electronic music apparatus; for example, the electronic music apparatus may be constructed such that the above-mentioned components are provided separately and interconnected via communication facilities, such as a MIDI interface, various networks and/or the like. Moreover, the electronic music apparatus of the present invention may be applied to any desired type of apparatus or equipment other than an electronic musical instrument as described above, such as a personal computer, karaoke apparatus or game apparatus.

Now, with reference to some of the accompanying drawings, a description will be given about play lists stored, for example, in the RAM 3 or external storage device 10 for use in the electronic music apparatus not only in reproduction of music data sets but also in conversion (export) of music data sets, as well as an pre-export (i.e., unexported) music data sets reproducible by the electronic music apparatus of Fig. 1 and post-export (i.e., exported) music data sets reproducible by any of other electronic music apparatus. Fig. 2 is a conceptual diagram showing an example structure of a play list, and Fig. 3 is a conceptual diagram showing example structures of a pre-export music data set (i.e., music data set before export) and post-export music data set (i.e., music data set after export). To facilitate the explanation, the pre-export or unexported music data set reproducible by the electronic music apparatus of Fig. 1 will be referred to as "maker/apparatus-specific-format data set", so as to distinguish from the post-export or exported music data set reproducible by the other electronic music apparatus that will be referred to as "general-purpose-format data set". Note again that, in this specification, the terms "formats" of music data sets embrace, for example, data structures (such as monaural and stereophonic structures) and data file formats (such as a WAV file format and MP3 file format).

First, the play lists will be described. As known in the art, each play list is reproduction definition information that defines, in reproducing order, a plurality of music data sets to be successively reproduced, even without a user's reproduction instruction, among a multiplicity of music data sets generally stored in the ROM 2, RAM 3 or external storage device 10. As shown in Fig. 2A, the play list defines a plurality of "item data". As shown in Fig. 2B, the item data include a "number", "checkmark", "title" and "music data storage path". The "number" is a unique number assigned to the to-be-reproduced music data set when it is added to the list; for example, a serial number is assigned to each added music data set in accordance with the reproducing order. The "checkmark" is intended to further narrow down music data sets to be reproduced among the music data sets defined in the play list. Namely, only each music data set with the "checkmark" added thereto is subjected to reproduction, and each music data set with no such "checkmark" is not subjected to reproduction. Whether not the checkmark is to be added can be determined as desired by the user per item data. The "title" is predetermined information pertaining to the music data set, which is information, such as a music piece name, to be visually shown in when a list of music data sets defined in the play list is displayed. The "music data storage path" is information pointing to storage locations where the music data set is actually stored. Namely, in the play list, only the respective storage paths of the music data sets are stored without the actual music data sets themselves being stored therein; thus, any desired one of the music data sets is read out and reproduced, on the basis of the storage path, from the storage locations in the external storage device 10 having the desired music data set stored therein. Note that the play lists and item data are not limited to the above-described structures.

Next, a description will be given about music data sets before and after export or conversion. Fig. 3A shows, on its left side, a maker/apparatus-specific-format data set that is a music data set before export (i.e., unexported or pre-export music data set), which comprises management data, monaural left-channel (monaural L) data of the WAV file format, monaural right-channel (monaural R) data of the WAV file format. The management data include or store, for each music data set, various parameters pertaining to recording/reproduction of the music data set, such as a data-recording input level, data-reproducing output level, punch-in/punch-out points, start and end points designating a data reproduction range (only a range between the start and end points is reproduced at the reproduction of the music data set). The maker/apparatus-specific-format data set, including the monaural left-channel (monaural L) data and monaural right-channel (monaural R) data of the WAV file format, is, for example, a body of audio data on the basis of which tones of an entire music piece are generated, and which comprises data reproducible by the electronic music apparatus of Fig. 1 but non-reproducible by another electronic music apparatus different in model type, maker or the like from the apparatus of Fig. 1.

Fig. 3B shows, on its right side, shows a "general purpose format data set" that is a music data set after export (i.e., post-export music data set), which comprises only monaural left-channel (monaural L) and right-channel (monaural R) data of the WAV file format. The "general-purpose-format data set" is reproducible by any of other electronic music apparatus different in model type, maker or the like from the electronic music apparatus of Fig. 1; such a general-purpose-format data set may or may not be reproducible by the music apparatus shown in Fig. 1. Further, as illustrated in Fig. 3B, the music apparatus of Fig. 1 is constructed to convert a range of data between the start and end points set in the management data.

Note that the maker/apparatus-specific-format data set and general-purpose-format data set may be in other than the illustrated data structure (monaural or stereophonic) and file format (WAV file format).

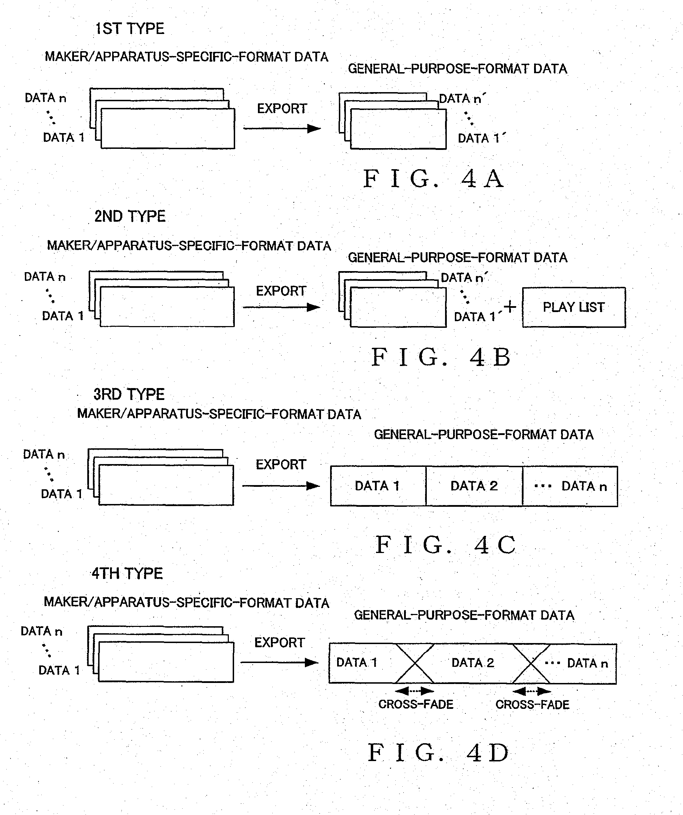

As stated above, the maker/apparatus-specific-format data set reproducible by the electronic music apparatus of Fig. 1 and the "general-purpose-format data set" is reproducible by any of other electronic music apparatus different in model type, maker or the like from the music apparatus shown in Fig. 1 are in different formats. Therefore, the maker/apparatus-specific-format data set is not reproducible by the other music apparatus. Thus, in order to make the music contents of the maker/apparatus-specific-format data set reproducible by the other music apparatus, it is necessary to convert (or export) the maker/apparatus-specific-format data set into data of the general-purpose-format. There have been known various examples of data conversion (export) processing, which can be classified broadly into several types. Thus, the following paragraphs describe four types of data conversion (export) processing for converting (exporting) a maker/apparatus-specific-format data set into a general-purpose-format data set, with reference to Figs. 4A - 4D.

The firs-type conversion processing (i.e., first-type export processing) shown in Fig. 4A is a process intended to collectively export a plurality of maker/apparatus-specific-format data sets, defined in a play list, into corresponding general-purpose-format data sets. Namely, the maker/apparatus-specific-format data sets before the export (i.e., data 1 - data n) and the general-purpose-format data sets after the export (i.e., data 1' - data n') correspond to each other on a one-to-one basis.

The second-type data conversion processing (i.e., second-type export processing) shown in Fig. 4B is a process intended to collectively export a plurality of maker/apparatus-specific-format data sets, defined in a play list, into corresponding general-purpose-format data sets, similarly to the first-type data conversion processing. The second-type data conversion processing is further intended to automatically create a new play list (for convenience of explanation, called "general-purpose-format-data play list") which defines the exported general-purpose-format data sets, as objects of reproduction, in reproducing order and which is used in another electronic music apparatus than the apparatus of Fig. 1. Thus, the other electronic music apparatus too can reproduce the exported general-purpose-format data set on the basis of the general-purpose-format-data play list, in a similar manner to data reproduction based on the play list of the maker/apparatus-specific-format data sets. Particularly, with the first-type export processing, the general-purpose-format-data play list has to be created by the user selecting and registering a plurality of general-purpose-format data sets in given order similar to the order defined by the play list of the maker/apparatus-specific-format data sets. However, with the second-type export processing, the general-purpose -format- data play list can be newly created automatically, without the user having to create it by himself or herself. Thus, the second-type export processing can significantly reduce the time and labor and achieve an enhanced convenience, as compared with the first-type export processing. Needless to say, the general-purpose-format data play list too is interpretable by other electronic music apparatus.

The third-type data conversion processing (i.e., third-type export processing) shown in Fig. 4C is a process intended to export a plurality of maker/apparatus-specific-format data sets (data 1 - data n) into a single integrated general-purpose-format data set. Namely, with the third-type export processing, a single general-purpose-format data set of a "medley" type can be created on the basis of a plurality of maker/apparatus-specific-format data sets. It is only necessary that the third-type export processing be able to manage the exported data sets as a single time-serially-connected general-purpose -format data set, and it does not matter whether the time-serially-connected general-purpose-format data set is actually stored in a memory in a successive manner.

The fourth-type data conversion processing (i.e., fourth-type export processing) shown in Fig. 4D is a process intended to export a plurality of maker/apparatus-specific-format data sets (data 1 - data n) into a single integrated general-purpose-format data set by connecting between the successive maker/apparatus-specific-format data sets through "cross-fading". Thus, the fourth-type export processing can create a single general-purpose-format data set of a "medley" type on the basis of a plurality of the maker/apparatus-specific-format data sets, as with the third-type export processing. By connecting between the maker/apparatus-specific-format data sets (data 1 - data n) through cross-fading, the forth-type export processing can provide general-purpose-format data capable of successively generating tones smoothly with no break therebetween during reproduction.

Note that the above-described four types of data conversion processing (export processing) are just illustrative and more than the four types of export processing types may be used. The user may select any desired one of the data conversion processing types.

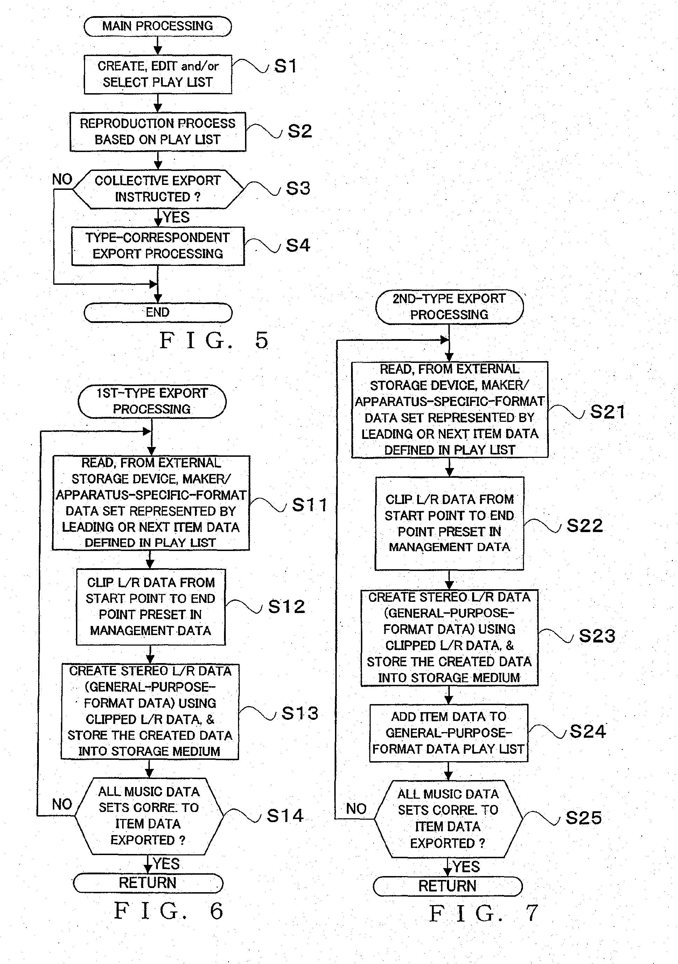

Now, with reference to Fig. 5, a description will be given about "main processing", in which are performed processing for successively reproducing the maker/apparatus-specific-format data sets on the basis of the play list, processing for collectively exporting the maker/apparatus-specific-format data sets into general-purpose-format data on the basis of the same play list as used in the successive reproduction. Fig. 5 is a flow chart showing an example operational sequence of the "main processing" carried out in the electronic music apparatus of Fig. 1.

Fig. 5 is a flow chart showing an example operational sequence of the "main processing" carried out in the electronic music apparatus of Fig. 1;

In the "main processing" shown in Fig. 5, a play list is created, edited and/or selected in response to user's operation, at step S1. For example, by operating the music data registration/deletion switches, the user can add or delete a desired music data set (i.e., maker/apparatus-specific-format data set) to or from a play list newly created in response to operation of the play list switches or a play list selected from one or more existing play lists. At step S2, one play list to be used for reproduction and/or export is specified, and a music data reproduction process is performed on the basis of the specified current play list in response to user's operation of the performance button etc. In this music data reproduction process, the maker/apparatus-specific-format data sets registered in the play list are sequentially read out and reproduced in the reproducing order. The music data reproduction process may be arranged in any conventionally-known manner. At step S3, a determination is made as to whether or not collective export of the maker/apparatus-specific-format data sets has been instructed. If the collective export has been instructed, for example, by the user operating the export switch (YES determination at step S3), then "type-correspondent export processing" is performed on all of the to-be-reproduced maker/apparatus-specific-format data sets defined in the current play list, at step S4. In this manner, the maker/apparatus-specific-format data sets are exported into general-purpose-format data. The "type-correspondent export processing" will be described in detail below with reference to Figs. 6-9.

Now, the "type-correspondent export processing" (see step S4 of Fig. 5) performed in the "main processing" will be described separately for each of the first- to fourth-type data conversion (or export) processing of Fig. 4, with reference to flow charts of Figs. 6 - 9. Namely, Figs. 6, 7, 8 and 9 show export processing intended to convert the music data from the maker/apparatus-specific format to the general-purpose format, which correspond to the first-type export processing (see Fig. 4A), second-type export processing (Fig. 4B), third-type export processing (see Fig. 4C) and fourth-type export processing (Fig. 4D), respectively.

Fig. 6 is a flow chart showing an example operational sequence of the first-type export processing. In this "first-type export processing", the maker/apparatus-specific-format data set, represented by the leading or next item data defined in the play list, is read out from the external storage device 10, at step S11. At next step S12, data in the range from the start point to the end point preset in the management data are clipped (i.e., cut out) from each of the monaural L and monaural R data included in the read-out maker/apparatus-specific-format data set. At following step S13, stereo L/R data (general-purpose-format data) are created using the thus-clipped monaural L and monaural R data as stereo L and stereo R data, and the thus-created stereo L/R data are stored into the external storage device 10. Namely, the maker/apparatus-specific-format data set is converted or exported into a general-purpose-format data set. File name to be assigned to the entire exported general-purpose-format data set may be the same as the pre-export maker/apparatus-specific-format data set, or may be automatically created using, for example, a combination of a predetermined string of characters (letters) and sequential number. Alternatively, the user may be prompted to enter a desired name each time the exported general-purpose-format data set corresponding to one pre-export maker/apparatus-specific-format data set is to be saved. At step S14, a determination is made as to whether all of the predetermined music data sets (maker/apparatus-specific-format data sets) have been exported in accordance with the item data defined in the current play list. If all of the predetermined music data sets (maker/apparatus-specific-format data sets) have been exported (YES determination at step S14), the instant export processing is brought to an end. If all of the predetermined music data sets have not been exported (NO determination at step S14), the processing reverts to step S11 in order to repeat the operations at steps S11 - S13. In the aforementioned manner, the data conversion (export) processing is performed on all of the maker/apparatus-specific-format data sets defined in the play list as objects of reproduction.

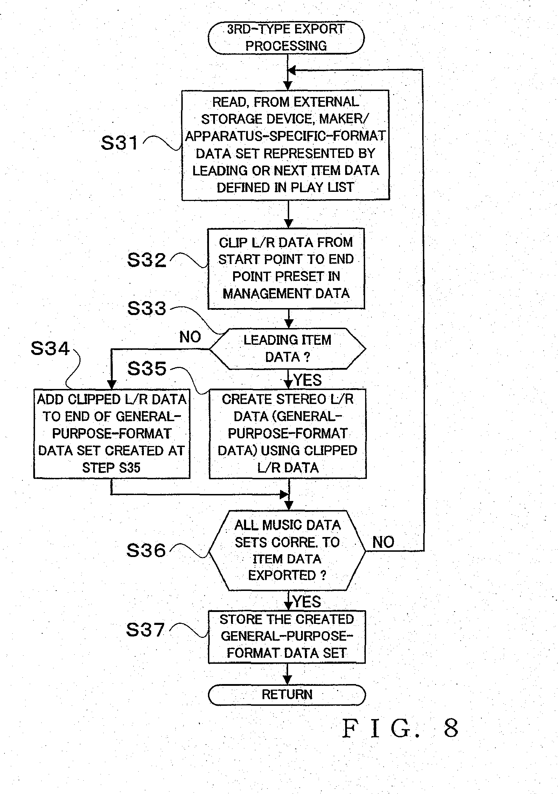

Fig. 7 is a flow chart showing an example operational sequence of the second-type export processing. This "second-type export processing" is different from the first-type export processing only in that it creates, at the time of data conversion, a general-purpose-format data play list that defines, in reproducing order, general-purpose-format data sets to be used in another music apparatus (see Fig. 4). Namely, operations in the second-type export processing are mostly similar to those in the first-type export processing. More specifically, steps S21 - S23 and S25 of Fig. 7 are similar to steps S11 - S13 and S14 of Fig. 6. In this manner, the data conversion (export) processing is performed on all of the maker/apparatus-specific-format data sets defined in the current play list as objects of reproduction. Then, after execution of steps S21 - S23, an operation is performed at step S24 for adding item data to the general-purpose-format data play list, to update the play list.

Fig. 8 is a flow chart showing an example operational sequence of the third-type export processing. In this "third-type export processing", the maker/apparatus-specific-format data set, represented by the leading or next item data defined in the current play list, is read out from the external storage device 10, at step S31. At next step S32, data in the range from the start point to the end point preset in the management data are clipped (i.e., cut out) from each of the monaural L and monaural R data included in the read-out maker/apparatus-specific-format data set. At following step S33, a determination is made as to whether the readout of the maker/apparatus-specific-format data set is based on the leading item data. With a YES determination at step S33, a stereo L/R data set (general-purpose-format data set) is created using the thus-clipped data monaural L and monaural R data as stereo L and stereo R data, at step S35. In this way, the maker/apparatus-specific-format data set is exported.

If, on the other hand, the readout of the maker/apparatus-specific-format data set is not based on the leading item data as determined at step S33 (NO determination at step S33), the processing branches to step S34, where the clipped monaural L and monaural R data are added to the end of the general-purpose-format data set having been created at step S35. At step S36, a determination is made as to whether all of the predetermined music data sets (maker/apparatus-specific-format data sets) have been exported in accordance with the item data defined in the current play list. If all of the predetermined (maker/apparatus-specific-format data sets have been exported (YES determination at step S36), the instant export processing is brought to an end after storing the created general-purpose-format data set in the external storage device 10 at step S37. File name to be assigned to the general-purpose-format data set may be the same as any one of the pre-export maker/apparatus-specific-format data sets, or may be automatically created using, for example, a predetermined string of characters (letters). Alternatively, the user may be prompted to enter a desired file name. If all of the predetermined music data sets have not been exported (NO determination at step S14), the processing reverts to step S31 in order to repeat the operations at steps S31 -S35. In the aforementioned manner, the data conversion (export) processing is performed on all of the maker/apparatus-specific-format data sets, defined in the current play list as objects of reproduction, for exporting the data sets into a single integrated general-purpose-format data set.

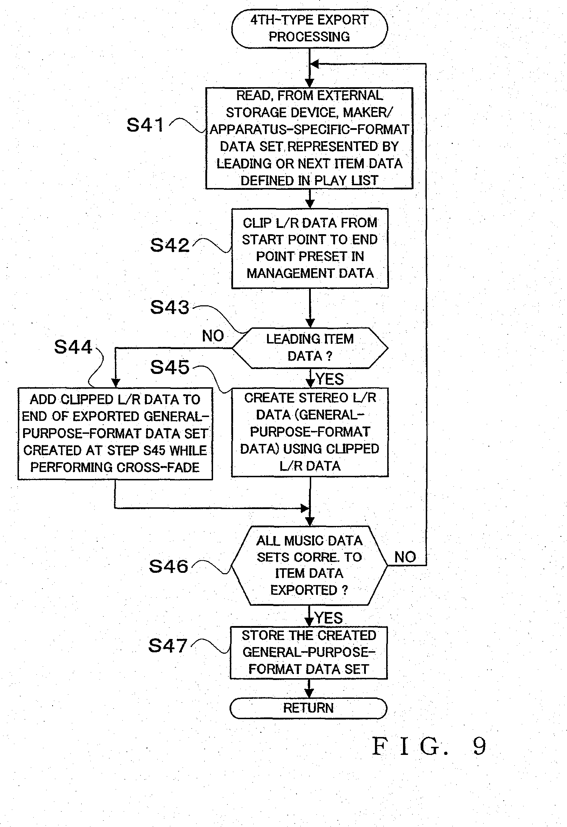

Fig. 9 is a flow chart showing an example operational sequence of the fourth-type export processing. This "fourth-type export processing" is different from the third-type export processing only in that general-purpose-format data sets are connected together, after the data conversion, through a cross-fade process (see Fig. 4). Namely, operations in the fourth-type export processing are mostly similar to those in the third-type export processing. More specifically, steps S41 - S47 (step S44 excluded) of Fig. 9 are similar to steps S31 - S37 (step S34 excluded) of Fig. 8. At step S44 different from step S34, the clipped L/R data are added to the end of the exported general-purpose-format data set created at step S45, while being subjected to cross-fading; thus, the exported general-purpose-format data sets are connected together using the cross-fade (i.e., in a cross-fading fashion). In this way, the data conversion (export) processing is performed on all of the maker/apparatus-specific-format data sets, defined in the current play list as objects of reproduction, for creating a single integrated exported general-purpose-format data set.

Whereas there have been described above four types of export processing for exporting music data sets of the maker/apparatus-specific format to one or more music data sets of the general-purpose format, the present invention may be provided with only one, two or three of the four types of export processing. In the case where two or more of the types of export processing are provided, the user may be caused to select which of the types is to be used.

Further, the present invention is not limited to the arrangements where only a range of data from the preset start point to the preset end point is exported; for example, if no data range to be exported is designated, the whole of the music data set in question may be exported. Whether a part or whole of the music data set in question should be exported may be selected by the user or the like. Further, whether a part or whole of the music data set should be exported may be set per item data stored in the play list.

Furthermore, the present invention is not limited to the arrangements where all of the music data sets defined in the play list are exported; for example, the present invention may be arranged to export only each of the music data sets for which the corresponding item data has the checkmark placed therein.

Furthermore, the present invention is not limited to the arrangements where the play list is created or updated by the user operating as necessary the data registration/deletion switches to add or delete a music data set to or from the play list. For example, a play list may be created or updated automatically with music data sets extracted as objects of reproduction in accordance with suitable extraction conditions.

Furthermore, in the above-described electronic music apparatus, arrangements may be made to allow the user or the like to instruct that the music data sets defined in the play list be reproduced randomly rather than in accordance with the reproducing order defined in the play list.

## Claims

1. A music data processing apparatus comprising:
a storage section storing a plurality of music data sets of a given first format (10);
an acquisition section that acquires reproduction definition information defining reproducing order of a group of desired music data sets of said first format among the plurality of music data sets stored in said storage section; and
a conversion section that, on the basis of the reproduction definition information acquired by said acquisition section, reads out, from said storage section, the desired music data sets defined by the reproduction definition information, and converts the read-out music data sets of said first format into music data of said second format,
wherein said reproduction definition information includes checkmarks indicating, for individual ones of the plurality of music data sets, whether or not reproduction is to be performed, and said conversion section converts each music data set of said first format, for which the checkmark indicates that reproduction is to be performed, into a music data set of said second format.

2. A music data processing apparatus as claimed in claim 1 wherein said checkmark can be set by a user for each of the music piece data sets.

3. A method for, on the basis of a plurality of music data sets of a given first format stored in a storage section (10), generating music data of a second format different from said first format, said method comprising:
a step (S1) of acquiring reproduction definition information defining reproducing order of a group of music data sets among the plurality of music data sets of said first format stored in the storage section;
a conversion step (S11, S12, S13, S21, S22, S23, S31, S32, S34, S35, S41, S42, S44, S45) of, on the basis of the reproduction definition information acquired by said step (S1) of acquiring, reading out, from said storage section (10), the desired music data sets defined by the reproduction definition information, and converting the read-out music data sets of said first format into music data of said second format,
wherein said reproduction definition information includes checkmarks indicating, for individual ones of the plurality of music data sets, whether or not reproduction is to be performed, and said conversion step converts each music data set of said first format, for which the checkmark indicates that reproduction is to be performed, into a music data set of said second format.

4. A method as claimed in claim 3 wherein said checkmark can be set by a user for each of the music piece data sets.

5. A program containing a group of instructions for causing a computer to execute a procedure for, on the basis of a plurality of music data sets of a given first format stored in a storage section (10), generating music data of a second format different from said first format, said procedure comprising:
a step (S1) of acquiring reproduction definition information defining reproducing order of a group of music data sets among the plurality of music data sets of said first format stored in the storage section;
a conversion step (S11, S12, S13, S21, S22, S23, S31, S32, S34, S35, S41, S42, S44, S45) of, on the basis of the reproduction definition information acquired by said step (S1) of acquiring, reading out, from said storage section (10), the desired music data sets defined by the reproduction definition information, and converting the read-out music data sets of said first format into music data of said second format,
wherein said reproduction definition information includes checkmarks indicating, for individual ones of the plurality of music data sets, whether or not reproduction is to be performed, and said conversion step converts each music data set of said first format, for which the checkmark indicates that reproduction is to be performed, into a music data set of said second format.

6. A program as claimed in claim 5 wherein said checkmark can be set by a user for each of the music piece data sets.
